# EUROPÄISCHE PATENTANMELDUNG

(11) **EP 1 726 400 A1**
(43) Veröffentlichungstag der Anmeldung: **29.11.2006**
(21) Anmeldenummer: 06009610.4
(22) Anmeldetag: 10.05.2006
(51) Int. Cl.: B23Q 11/08, F16L 51/02, F16L 11/115, F16J 3/04, F16D 3/84

(54) **Faltenschlauch aus verformbarem Material**

(30) Priorität: 24.05.2005 DE 102005023723
(71) Anmelder: Meurer, Jan, 45478 Mülheim an der Ruhr (DE)
(72) Erfinder: Meurer, Manfred, 45470 Mülheim an der Ruhr (DE)
(74) Vertreter: Sroka, Peter-Christian

(57) **Zusammenfassung**

Ein Faltenschlauch (1) mit innen liegenden Stützelementen (4) zum Abstützen der außen liegenden Falten ist gekennzeichnet, durch den außen liegenden Falten zugeordnete Spannelemente (5) zum Fixieren der Stützelemente (4) in den Falten.

## Beschreibung

Die Erfindung betrifft einen Faltenschlauch aus verformbarem Material mit innen liegenden Stützelementen zum Abstützen der außen liegenden Falten.

Derartige Faltenschläuche oder auch Faltenbälge, wie sie z.B. in DE 295 16 657 U1, DE 37 40 583 A1 oder DE 41 27 091 A1 beschrieben sind, dienen einerseits zum Schutz von Maschinenteilen oder Maschinenkomponenten gegen Verschmutzung und andererseits dazu, eine Gefährdung von Bedienungspersonen zu vermeiden. Um eine gute Formstabilität derartiger Faltenschläuche sicher zu stellen, ist es bekannt, in die Innenseite der äußeren Falten Stützelemente oder Versteifungsstege bzw. Versteifungsringe einzusetzen, die mit den Spitzen der Falten durch Verschweißen oder durch Vernähen mit dem Schlauchmaterial fest verbunden sind. Das Verschweißen ist relativ aufwendig. Der Nachteil eines Einnähens der Stützelemente bzw. Versteigungsstege oder -ringe in das Schlauch- bzw. Balgmaterial besteht darin, daß dieses Balgmaterial durch den Nähvorgang geschwächt und die Dichtheit des Faltenschlauchs bzw. Faltenbalgs verringert wird.

Der Erfindung liegt die Aufgabe zugrunde einen Faltenschlauch zu schaffen, bei dem die innen liegenden Stützelemente ohne die Notwendigkeit des Einschweißens oder Vernähens mit dem verformbaren Faltenschlauchmaterial zuverlässig in ihrer Lage fixiert werden.

Zur Lösung dieser Aufgabe ist der erfindungsgemäße Schlauch gekennzeichnet durch auf die außen liegenden Falten aufgesetzte Spannelemente zum Fixieren der Stützelemente in den Falten, wobei diese Spannelemente auch lösbar auf die außen liegenden Falten aufgesetzt sein können.

Unabhängig davon, ob der Faltenschlauch einen kreisrunden oder rechteckigen Querschnitt hat und die Stützelemente entsprechend ringförmig gestaltet sind, sind die Spannelemente als geteilte Spannringelemente ausgebildet, deren Enden mittels Spannmuffen aneinander befestigt und miteinander verspannt werden. Bei einem z.B. ringförmigen oder ovalen Querschnitt des Faltenschlauchs ist das Spannelement als einfach geteiltes Spannringelement ausgebildet. Bei einem z.B. rechteckigen Querschnitt des Faltenschlauchs besteht das einzelne Spannelement aus zwei oder mehreren Spannringelementen, deren sich im fertigen Montagezustand gegenüber liegenden Enden mittels Spannmuffen aneinander befestigt bzw. miteinander verspannt sind.

Gemäß einer abgewandelten Ausführungsform der Erfindung sind zum Fixieren der Stützelemente Spannelemente in Form von Nieten vorgesehen.

Die Erfindung wird im folgenden anhand der Zeichnungen näher beschrieben.
- Figur 1: zeigt eine Seitenansicht des erfindungsgemäßen Faltenschlauchs im gestreckten Zustand;
- Figur 2: zeigt einen Querschnitt des Faltenschlauchs;
- Figur 3: zeigt in isometrischer Darstellung ein Teilstück des erfindungsgemäß verwendeten Spannelementes;
- Figur 4: in schematischer Darstellung die Zuordnung des erfindungsgemäß verwendeten Spannelementes zu einem in einen Faltenschlauch eingesetzten Stützelement vor dem Verspannen des Spannelementes;
- Figur 5: zeigt eine Seitenansicht des Faltenschlauchs im gestauchten Zustand;
- Figur 6: zeigt einen Querschnitt des Faltenschlauchs nach dem Verspannen des erfindungsgemäß verwendeten Spannelementes;
- Figur 7: zeigt in schematischer Darstellung das erfindungsgemäß verwendete Spannelement in Seiner Zuordnung zu einem in den Faltenschlauch eingesetzten Stützelement nach dem Verspannen des Spannelementes;
- Figur 8: zeigt eine abgewandelte Ausführungsform der Spannelemente in Form von Nieten;
- Figur 9: zeigt in vergrößerter Darstellung die Detailansicht "a" aus Figur 8.

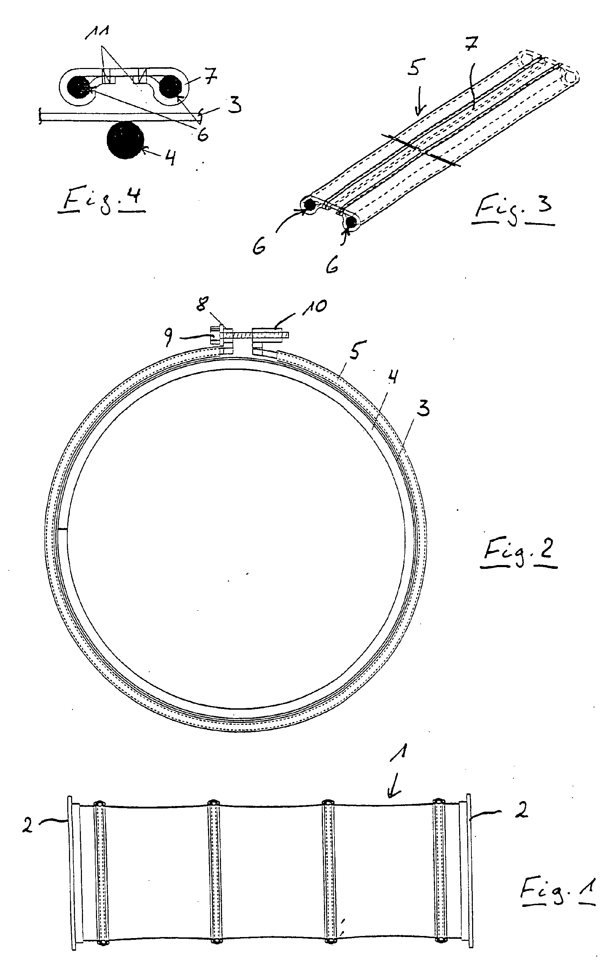

Der in den Figuren 1 und 5 in der Seitenansicht dargestellte Faltenschlauch 1 besteht aus einem flexiblen bzw. verformbaren Material, z.B. aus einem Gewebeschlauch, der gegebenenfalls mit Kunststoff, z.B. Silikon, beschichtet sein kann. An den Enden des Faltenschlauchs sind Flansche 2 zur Befestigung des Faltenschlauchs in bzw. an entsprechenden Maschinenaggregaten bzw. Maschinengehäusen angebracht.

Gemäß Figur 2 sind in das Faltenschlauchmaterial 3 innen liegende Stützelemente 4 zum Abstützen der außen liegenden Falten, siehe auch die Figuren 5 und 6 eingelegt. Bei einem im Querschnitt z.B. kreisrunden Faltenbalg hat dieses Stützelement 4 die Form eines geschlossenen oder auch einfach geteilten Stützringes, der vorzugsweise aus Federstahldraht besteht. Das erfindungsgemäß verwendete Spannelement 5 hat bei einem kreisrunden Faltenschlauch vorzugsweise die Form eines einfach geteilten Klemmrings. Dieses Spannelement in Form eines Klemmrings besteht im wesentlichen aus zwei in seitlichem Abstand nebeneinander liegenden Spanndrähten 6, die parallel zueinander liegend in einen verformbaren Materialstreifen 7 eingenäht (Nähte 11) oder eingeschweißt sind.

An dem einen Ende des Spannelementes 4 ist eine Halterung 8 zum Hindurchstecken oder Einschrauben einer Schraube 9 befestigt und an dem anderen Ende des Spannelementes 5 ist eine Mutter 10 für diese Schraube 9 befestigt. Die Elemente 8, 9 und 10 bilden eine Spannmuffe, um das einzelne Spannelement aus den in den Figuren 2 und 4 angedeuteten, lose bzw. locker um ein inneres Stützelement 4 herum gelegten Zustand in den in den Figuren 6 und 7 verdeutlichten Zustand zu verspannen, in dem das Spannelement 5 das innerhalb des Faltenschlauchs befindliche Stützelement dauerhaft fixiert.

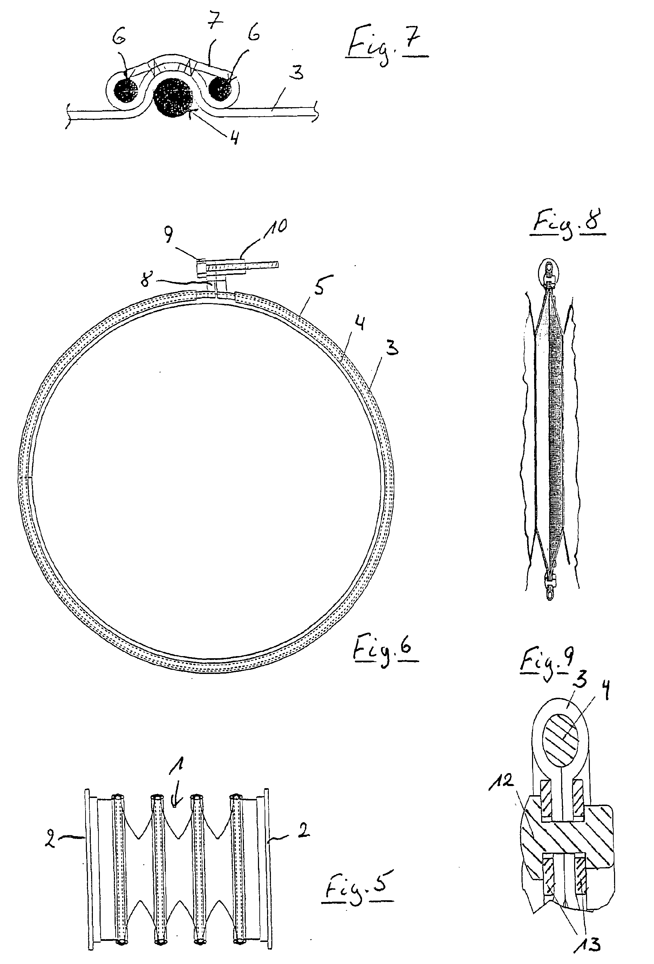

Gemäß den Figuren 8 und 9 sind die Spannelemente als Nieten 12, vorzugsweise Blind- bzw. Popnieten, ausgebildet, die vorzugsweise in gleichmäßigen Winkelabständen in den Umfangsbereichen der einzelnen nach außen gerichteten Falte angeordnet sind, die sich bezogen auf die Lage des Stützelementes 4 in radialer Richtung nach innen anschließen. Zwischen die Köpfe der Nieten 12 und das Faltenschlauchmaterial 3 sind Unterlegscheiben 13 zwischengelegt.

Die Stützelemente 4 bestehen vorzugsweise aus Stahlringen.

## Patentansprüche

1. Faltenschlauch mit innen liegenden Stützelementen (4) zum Abstützen der außen liegenden Falten **gekennzeichnet durch** auf die außen liegenden Falten aufgesetzte Spannelemente (5) zum Fixieren der Stützelemente (4) in den Falten.

2. Faltenschlauch mit ringförmigen Stützelementen (4) nach Anspruch 1, **dadurch gekennzeichnet, daß** die Spannelemente (5) als geteilte Spannringelemente ausgebildet sind, deren Enden mittels Spannmuffen (8, 9, 10) aneinander befestigt sind.

3. Faltenschlauch nach Anspruch 1 oder 2, **dadurch gekennzeichnet, daß** jedes Spannringelement (5) zwei im Abstand nebeneinander liegende Spanndrähte (6) aufweist, die mittels eines verformbaren Materialstreifens (7) miteinander verbunden sind.

4. Faltenschlauchelement nach Anspruch 3, **dadurch gekennzeichnet, daß** die Spanndrähte (6) in den Materialstreifen (7) eingenäht sind.

5. Faltenschlauch nach Anspruch 5, **dadurch gekennzeichnet, daß** die Spanndrähte (6) in den Materialstreifen (7) eingeschweißt sind.

6. Faltenschlauch nach Anspruch 2, **dadurch gekennzeichnet, daß** jede Spannmuffe eine an dem einen Ende des Spannringelementes (5) befestigbare Halterung (8) mit einer Öffnung für eine Schraube (9) und eine im fertigen Montagezustand an dem gegenüberliegenden Ende des bzw. eines Spannringelementes befestigte Mutter (10) aufweist.

7. Faltenschlauch nach einem der Ansprüche 1 bis 6, **gekennzeichnet durch** lösbar auf die außen liegenden Falten aufgesetzte Spannelemente (5).

8. Faltenschlauch mit innen liegenden Stützelementen (4) zum Abstützen der außen liegenden Falten, **gekennzeichnet durch** den außen liegenden Falten zugeordnete Spannelemente in Form von Nieten (12) zum Fixieren der Stützelemente (4) in den Falten.

9. Faltenschlauch nach Anspruch 8, **gekennzeichnet durch** mehrere in Abständen über den an die Stützelemente (4) nach innen liegenden Umfangsbereichen verteilte Nieten (12).

10. Faltenschlauch nach Anspruch 8 oder 9, **dadurch gekennzeichnet, daß** die Nieten mit ihrem Schaft durch die beiden Materiallagen des Faltenschlauchmaterials hindurchgesteckt sind und zwischen den Nietköpfen und dem Faltenschlauchmaterial Unterlegscheiben eingelegt sind.

11. Faltenschlauch nach einem der Ansprüche 8 bis 10, **dadurch gekennzeichnet, daß** die Nieten Blindnieten (Popnieten) sind.
